(19) Europäisches Patentamt
European Patent Office
Office européen des brevets

(11) **EP 1 349 862 B1**

(12) # FASCICULE DE BREVET EUROPEEN

(45) Date de publication et mention de la délivrance du brevet:
**21.07.2004 Bulletin 2004/30**

(21) Numéro de dépôt: **01270539.8**

(22) Date de dépôt: **07.12.2001**

(51) Int Cl.[7]: **C07F 9/40**, C07B 61/02

(86) Numéro de dépôt international:
**PCT/FR2001/003876**

(87) Numéro de publication internationale:
**WO 2002/048159 (20.06.2002 Gazette 2002/25)**

(54) **PROCEDE DE PREPARATION DE RADICAUX NITROXYDE Beta-PHOSPHORES**

VERFAHREN ZUR HERSTELLUNG VON Beta-PHOSPHORNITROXIDRADIKALEN

METHOD FOR PREPARING Beta-PHOSPHOROUS NITROXIDE RADICALS

(84) Etats contractants désignés:
**AT BE CH CY DE DK ES FI FR GB GR IE IT LI LU MC NL PT SE TR**

(30) Priorité: **11.12.2000 FR 0016066**

(43) Date de publication de la demande:
**08.10.2003 Bulletin 2003/41**

(73) Titulaire: **Atofina**
**92800 Puteaux (FR)**

(72) Inventeurs:
- **GUERRET, Olivier**
  **F-64230 Mazerolles (FR)**
- **COUTURIER, Jean-Luc**
  **F-69006 Lyon (FR)**
- **LE MERCIER, Christophe**
  **F-69300 Caluire Cuire (FR)**

(74) Mandataire: **Treuil, Claude**
**Atofina**
**Département Propriété Industrielle**
**4-8 cours Michelet**
**La Défense 10**
**92091 Paris La Défense Cedex (FR)**

(56) Documents cités:
**WO-A-00/40526**
**WO-A-00/40550**
**WO-A-96/24620**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

**Description**

La présente invention a pour objet un procédé de préparation de radicaux nitroxyde β-phosphorés de formule :

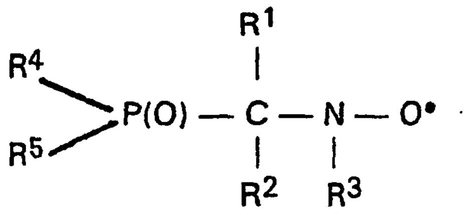

(I)

dans laquelle $R^1$, $R^2$, $R^3$, $R^4$ et $R^5$ seront définis ultérieurement. Ces composés sont utilisés notamment comme régulateurs de polymérisation radicalaire.

Ces composés peuvent être obtenus notamment par oxydation des N-alkylaminophosphonates de formule :

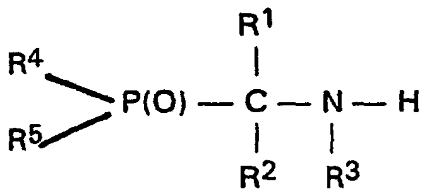

(II)

Les N-alkylaminophosphonates (II) peuvent être obtenus de façon connue en faisant réagir un composé carbonylé $R^1R^2C(O)$, une amine primaire $R^3NH_2$ et un composé phosphoré $HP(O)R^4R^5$ ayant un hydrogène mobile selon une réaction type de Mannich :

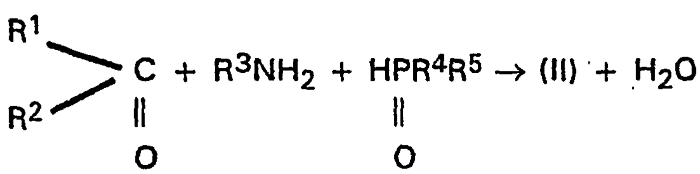

Il est décrit dans la demande de brevet internationale WO 96/24620 un procédé qui consiste à faire réagir dans une première étape un composé carbonylé $R^1R^2C(O)$ avec une amine primaire $R^3NH_2$ selon un rapport molaire composé carbonylé/amine primaire sensiblement égal à 1, puis dans une seconde étape à ajouter au composé obtenu dans la première étape un composé phosphoré $HP(O)R^4R^5$ selon un rapport molaire composé phosphoré/produit obtenu dans la première étape allant de 1,5 à 2,5, voire plus. Cette façon de procéder présente plusieurs inconvénients.

Ainsi, l'eau formée dans la première étape lors de la réaction du composé carbonylé avec l'amine primaire qui conduit à la formation d'imine selon le schéma :

$$> C = O + -NH_2 \rightarrow > C = N- + H_2O$$

n'est pas éliminée avant l'addition du composé phosphoré, ce qui peut être de nature à entraîner une éventuelle hydrolyse dudit composé phosphoré, notamment lorsque ce dernier est un phosphite.

En outre, l'utilisation d'un très grand excès de composé phosphoré (150 % à 250 %, voire plus) par rapport au composé obtenu dans la première étape (imine), est rédhibitoire pour un procédé industriel.

De plus, cet excès, outre le fait des difficultés à l'éliminer, est de nature à générer de nombreuses impuretés par réaction avec, notamment, le composé carbonylé non transformé pour conduire à des hydroxyphosphonates (>C(OH)-P(O)<) dans le cas où le composé phosphoré utilisé est un phosphite. Cet excès de composé phosphoré peut également entraîner la formation de produits lourds résultant de la réaction entre (II), le composé carbonylé et le

composé phosphoré $HP(O)R^4R^5$ en excès.

Toutes ces impuretés susceptibles d'être présentes dans le produit brut (II) rendent difficile la purification du N-alkylaminophosphonate (II) et, par conséquent, son utilisation ultérieure.

Afin de surmonter ces inconvéninets, la demanderesse a réalisé la synthèse de l'aminophosphonate (II) par réaction d'un composé carbonylé $R^1R^2C(O)$, d'une amine primaire $R^3NH_2$ et d'un composé phosphoré $HP(O)R^4R^5$ en effectuant les étapes suivantes :

a) on fait réagir un composé carbonylé $R^1R^2C(O)$ avec une amine primaire $R^3NH_2$ selon un rapport molaire $R^1R^2C(O) / R^3NH_2$ compris entre 0,8 et 1,5 et, de préférence, compris entre 0,9 et 1,1 à une température comprise entre 0°C et 120°C, à une pression allant de 1 à 10 bars ; puis on élimine l'eau formée du milieu réactionnel ;
b) on fait réagir le composé obtenu en a) avec un composé phosphoré $HP(O)R^4R^5$ utilisé selon un rapport molaire $HP(O)R^4R^5$ / composé a) au plus égal à 1,5, et, de préférence, compris entre 1 et 1,5, à une température comprise entre 0°C et 120°C ;
c) on effectue un traitement acide du milieu réactionnel obtenu en b), on ajoute ensuite un solvant organique, on décante, on récupère la phase aqueuse puis on effectue un traitement basique de ladite phase aqueuse ;
d) on extrait l'aminophosphonate au moyen d'un solvant organique identique à celui utilisé précédemment en c) ;
e) puis, on élimine totalement ledit solvant, et on isole ledit aminophosphonate (II) qui est oxydé en nitroxyde-β-phosphoré selon les étapes $a^1$/, $b^1$/ et $c^1$/ décrites ci-après.

Bien que cette façon d'opérer permet de surmonter certains inconvénients de l'art antérieur, il n'en reste pas moins que la réaction entre le phosphite et l'imine -étape b)- est longue (plusieurs heures) et que l'amino phosphonate II - bien qu'exempt d'impuretés lourdes est obtenu au prix d'un traitement de purification et d'extraction acide/basique en milieu solvant fastidieux qui grêve le procédé global d'obtention du nitroxyde de β-phosphoré (I), nitroxyde obtenu par oxydation dudit aminophosphonate (II) selon un procédé décrit dans la demande FR 2788270.

Ce procédé consiste à oxyder l'aminophosphonate (II) en réalisant les étapes suivantes :

$a^1$/ on solubilise l'aminophosphonate (II) obtenu en e) avec un solvant organique non miscible à l'eau, puis ;
$b^1$/ ensuite, on ajoute simultanément et sous forte agitation au milieu ainsi obtenu, une quantité de peracide organique non halogéné selon un rapport molaire peracide/aminophosphonate (II) allant de 1,5 à 2,5 et une quantité suffisante d'une solution aqueuse basique d'un carbonate ou d'un hydrogénocarbonate d'un métal alcalin ou d'un métal alcalinoterreux ou bien encore d'une solution ammoniacale pour obtenir un pH allant de 5 à 12, et de préférence, allant de 6 à 9, à une température comprise entre -10°C et +40°C et, de préférence comprise entre -5°C et +30°C, jusqu'à conversion complète de l'aminophosphonate (II) ;
$c^1$/ puis on récupère la phase organique par simple décantation, et on isole le nitroxyde β-phosphoré par évaporation du solvant organique sous pression réduite.

Ce procédé d'oxydation permet d'obtenir un nitroxyde β-phosphoré de pureté satisfaisante pour son utilisation ultérieure mais la productivité globale du procédé est abaissée du fait que l'obtention de l'aminophosphonate II est longue et nécessite, pour avoir une pureté suffisante pour être oxydée, un traitement de purification et d'isolement coûteux.

La demanderesse a maintenant trouvé qu'elle pouvait obtenir un aminophosphonate rapidement, en évitant les étapes c) et d) du traitement acido/basique en milieu solvant et l'étape d'extraction e) et ceci en opérant avec un rapport molaire phosphite/imine sensiblement égal à 1 et en effectuant l'étape b) en présence d'un acide de Lewis.

La présente invention a donc pour objet un procédé de fabrication de composés de formule générale :

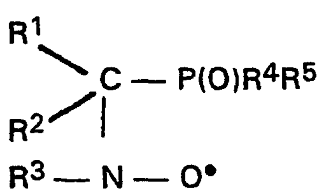

(I)

dans laquelle $R^1$ et $R^2$, identiques ou différents, représentent un atome d'hydrogène, un radical alkyle linéaire, ramifié ou cyclique ayant un nombre d'atomes de carbone allant de 1 à 10, un radical aryle, un radical aralkyle ayant un nombre d'atomes de carbone allant de 1 à 10, ou bien $R^1$ et $R^2$ sont reliés entre eux de façon à former un cycle incluant l'atome de carbone portant lesdits $R^1$ et $R^2$, ledit cycle ayant un nombre d'atomes de carbone, incluant le carbone porteur des

radicaux $R^1$ et $R^2$, allant de 3 à 8 ; $R^3$ représente un radical hydrocarboné, linéaire ou ramifié, saturé ou insaturé, pouvant comprendre au moins un cycle, ledit radical ayant un nombre d'atomes de carbone allant de 1 à 30 ; $R^4$ et $R^5$, identiques ou différents, représentent un radical alkyle, linéaire ou ramifié, ayant un nombre d'atomes de carbone allant de 1 à 20, un radical cycloalkyle, aryle, alkoxyle, aryloxyle, aralkyloxyle, perfluoroalkyle, aralkyle, dialkyl- ou diarylamino, alkylarylamino, thioalkyle, ou bien $R^4$ et $R^5$ sont reliés entre eux de façon à former un cycle incluant l'atome de phosphore, ledit hétérocycle ayant un nombre d'atomes de carbone allant de 2 à 4 et pouvant contenir en outre 1 ou plusieurs atomes d'oxygène, de soufre ou d'azote ;

ledit procédé consistant à oxyder un aminophoshonate de formule

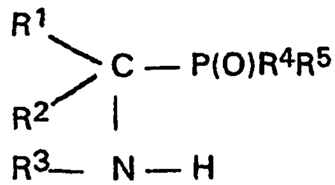

(II)

en milieu solvant au moyen d'un péracide organique non halogéné en milieu biphasique eau/solvant avec une phase aqueuse tamponnée à un pH allant de 5 à 12 ; ledit aminophosphonate étant obtenu par réaction d'un composé carbonylé $R^1R^2C(O)$, d'une amine primaire $R^3NH_2$ et d'un composé phosphoré $HP(O)R^4R^5$, $R^1$, $R^2$, $R^3$, $R^4$ et $R^5$ ayant les significations précédemment données en effectuant les étapes (successives) suivantes :

a) on fait réagir un composé carbonylé $R^1R^2C(O)$ avec une amine primaire $R^3NH_2$ selon un rapport molaire $R^1R^2C(O) / R^3NH_2$ compris entre 0,8 et 1,5 et, de préférence, compris entre 0,9 et 1,1 à une température comprise entre 0°C et 120°C, à une pression allant de 1 à 10 bars ; puis on élimine l'eau formée du milieu réactionnel ; et
b) on fait réagir le composé obtenu en a) avec un composé phosphoré $HP(O)R^4R^5$ ;

ledit procédé étant caractérisé en ce que l'on effectue l'étape b) en présence d'un acide de Lewis, en utilisant un rapport molaire $HP(O)R^4R^5$ / composé obtenu dans l'étape a), sensiblement égal à 1 à une température au plus égale à 100°C et en ce que le milieu obtenu en b) est soumis directement et sans purification à une réaction d'oxydation réalisée selon les conditions mentionnées précédemment.

La pureté du nitroxyde β-phosphoré obtenu peut être améliorée par flash distillation sous pression réduite ou par cristallisation à basse température.

Selon la présente invention, l'acide de Lewis est choisi parmi le $BF_3$ et ses complexes avec les éthers tels que le diéthyléther, le tétrahydrofuranne ; les trifluorates des lanthanides tels que l'ytterbium. trifluorométhane sulfonate $(CF_3SO_3)_3Yb$ ; $SnCl_4$, $SnCl_2$, $ZnCl_2$.

De préférence, on utilisera le diéthyléthertrifluoroborane $(CH_3CH_2)_2O.BF_3$.

L'acide de Lewis est utilisé en une quantité molaire au plus égale à 20 % par rapport à l'imine obtenue dans l'étape a) et, de préférence, en une quantité molaire comprise entre 5 % et 15 %.

A titre d'illustration de composés carbonylés $R^1R^2C(O)$ utilisables selon la présente invention, on citera le triméthylacétaldéhyde (pivalaldéhyde), l'isobutyraldéhyde, le cyclohexanecarboxyaldéhyde, la diéthylcétone, la dibutylcétone, la méthyléthylcétone, la cyclohexanone, la 4-tertiobutylcyclohexanone, l'α-tétralone.

A titre d'illustration d'amines primaires $R^3$-$NH_2$ utilisables selon la présente invention, on citera la méthylamine, l'éthylamine, la propylamine, l'isopropylamine, la tertiobutylamine, la diphénylméthylamine, la triphénylméthylamine, l'aniline, l'α-naphtylamine, la benzylamine, la 1-phényléthylamine, la cyclohexylamine, la cyclopentylamine.

De préférence, on utilisera la tertiobutylamine, l'isopropylamine, la diphénylméthylamine, la 1-phényléthylamine ou la cyclohexylamine.

La réaction entre le composé carbonylé $R^1R^2C(O)$ et l'amine $R^3NH_2$ (étape a) s'effectue sous forte agitation à une température comprise entre 0°C et 120°C et, de préférence, à une température comprise entre 0°C et 60°C. On opère généralement à une pression comprise entre 1 bar et 10 bars, de préférence à pression atmosphérique et sous atmosphère de gaz inerte tel que l'azote ou l'argon. La durée de réaction peut varier dans une large mesure. Elle est fonction de la réactivité de l'amine mise en oeuvre. La conversion totale du composé carbonylé $R^1R^2C(O)$ peut être vérifiée par analyse chromatographique (CPV).

La réaction terminée, on arrête l'agitation et on laisse décanter le milieu réactionnel. Généralement, la décantation est rapide. On élimine ensuite la phase aqueuse constituée en quasi totalité par l'eau formée lors de la réaction entre le composé carbonylé et l'amine primaire qui conduit à l'imine (III) selon le schéma :

$$R^1R^2C(O) + R^3NH_2 \xrightarrow{-H_2O} R^1R^2C = NR^3$$

(III)

On peut parfaire l'élimination de l'eau par addition d'un agent déshydratant tel qu'un tamis moléculaire à la phase décantée, ou bien encore effectuer une distillation azéotropique.

On fait réagir l'imine (III) obtenue dans l'étape a) avec un composé $HP(O)R^4R^5$ (étape b)) en présence d'un acide de Lewis.

A titre d'illustration de composés phosphorés $HP(O)R^4R^5$ utilisables selon la présente invention, on citera le phosphite de diméthyle, le phosphite de diéthyle, le phosphite de n-propyle, le phosphite de dibenzyle, le phosphite de diisopropyle, le phosphite de di-n-dodécyle, la diphénylphosphine oxyde, la dibenzylphosphine oxyde.

Le composé phosphoré $HP(O)R^4R^5$ est ajouté à l'imine (III) obtenue dans l'étape a), sous forte agitation, à une température au plus égale à 100°C et, de préférence, à une température comprise entre 40°C et 80°C. On opère, comme dans l'étape a), sous atmosphère de gaz inerte et, de préférence, à pression atmosphérique. L'addition terminée, on ajoute lentement l'acide de Lewis.

L'addition de l'acide de Lewis étant exothermique, on laisse monter la température jusqu'à au plus 100°C et, de préférence, entre 40°C et 80°C. L'addition terminée, on maintient le milieu réactionnel sous agitation au plus 1 heure, à la température atteinte en fin d'addition de l'acide de Lewis.

On utilise le composé phosphoré $HP(O)R^4R^5$ par rapport à l'imine obtenue dans l'étape a) selon un rapport molaire composé phosphoré / imine (III) sensiblement égal à 1.

Le milieu réactionnel obtenu dans l'étape b) est ensuite soumis directement à une réaction d'oxydation selon les étapes $a^1$/ à $c^1$/ telles que décrites précédemment.

A titre d'illustration de solvants organiques utilisables selon la présente invention dans les étapes $a^1$/ à $c^1$/, on citera les hydrocarbures aliphatiques tels que le pentane, l'heptane, le cyclohexane ; les solvants chlorés tels que le $CH_2Cl_2$ ; les esters d'acides aliphatiques tels que l'acétate d'éthyle, le propionate d'éthyle, ou un mélange d'au moins deux des solvants précités.

A titre d'illustration de peracides organiques non halogénés utilisables selon la présente invention, on citera l'acide peracétique, l'acide perpropionique, l'acide perbutanoïque.

Les composés (I) peuvent être identifiés par analyse élémentaire, HPLC, IR et RPE.

Les composés (II) obtenus selon l'invention peuvent être identifiés par RMN du proton, du $^{13}C$ et du $^{31}p$, par IR et par analyse élémentaire.

Les composés obtenus selon le procédé de la présente invention sont d'une pureté suffisante pour être utilisés comme régulateurs des polymérisations radicalaires.

Le procédé selon la présente invention est rapide et présente l'avantage de ne pas utiliser de solvant lors de la synthèse de l'aminophosphonate et de ne pas avoir à purifier ledit aminophosphonate, ce qui réduit la quantité d'effluents à traiter. D'où, manipulations réduites, ce qui permet d'augmenter la productivité du procédé.

Le procédé selon la présente invention présente également l'avantage de conduire à des rendements élevés en radicaux nitroxyde β-phosphorés.

L'exemple qui suit illustre l'invention.

## EXEMPLE :

### OBTENTION DU N- TERTIOBUTYL-1-DIETHYLPHOSPHONO-2,2-DIMETHYLPROPYL NITROXYDE (CI-APRES NITROXYDE) PAR OXYDATION DU 2,2-DIMETHYL-1-(1,1-DIMETHYL-ETHYLAMINO)PROPYL PHOSPHONATE DE DIETHYLE (CI-APRES AMINOPHOSPHONATE) :

La réaction est effectuée sous atmosphère d'azote, dans un réacteur SVL double enveloppe de 2 1 muni d'une ampoule de coulée isobare, d'un réfrigérant sortant sur un bulleur, d'une arrivée d'azote, d'une agitation mécanique (ancre) et d'une sonde de température.

Dans le réacteur purgé à l'azote, on charge 100 g de pivalaldéhyde (1,16 mol). On charge dans l'ampoule de coulée 84,9 g de tertiobutylamine (1,16 mol). A température ambiante, on coule goutte à goutte la tertiobutylamine. A la fin de la coulée, on chauffe à 35 °C et on laisse réagir 2 heures. Puis on refroidit et on soutire la phase aqueuse formée.

A 40°C, on coule ensuite goutte à goutte 176,2 g de diéthylphosphite (1,28 mol), puis on coule goutte à goutte 16,5 g de complexe $(CH_3CH_2)_2O.BF_3$ (0,116 mol). On laisse la température monter à 60°C. A la fin de la coulée, on

laisse réagir une heure à 60°C.

On obtient 356 g d'aminophosphonate brut sous forme de liquide incolore. La pureté déterminée par HPLC est de 80 % (rendement = 90 %). Le brut réactionnel est utilisé tel quel pour la réaction d'oxydation.

On charge dans le réacteur 395,5 g d'acide péracétique 40 % (2,08 mol). On ajoute 350 g de dichlorométhane et 350 g d'eau. On neutralise le milieu réactionnel à pH=7,2 par ajout de $K_2CO_3$ 35 %. En maintenant la température à 20-25°C, on coule goutte à goutte les 356 g d'aminophosphonate brut à 80 % (1,04 mol) obtenus précédemment tout en maintenant le pH à 7,2 par ajout de $K_2CO_3$. Après la coulée de l'aminophosphonate, on laisse réagir 1 h à température ambiante en continuant de maintenir le pH à 7,2. A la fin de la réaction, on amène le pH à 8 par ajout de $K_2CO_3$ 35 %. On laisse décanter. On retire la phase aqueuse. On lave la phase organique à l'eau. Le solvant est évaporé sous vide pour donner 263 g de nitroxyde se présentant sous forme d'un liquide orange. La pureté déterminée par HPLC est de 85 % (0,76 mol). Le rendement global est de 66 %.

## Revendications

**1.** Procédé de fabrication de composés de formule générale :

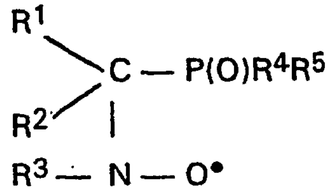

(I)

dans laquelle $R^1$ et $R^2$, identiques ou différents, représentent un atome d'hydrogène, un radical alkyle linéaire, ramifié ou cyclique ayant un nombre d'atomes de carbone allant de 1 à 10, un radical aryle, un radical aralkyle ayant un nombre d'atomes de carbone allant de 1 à 10, ou bien $R^1$ et $R^2$ sont reliés entre eux de façon à former un cycle incluant l'atome de carbone portant lesdits $R^1$ et $R^2$, ledit cycle ayant un nombre d'atomes de carbone, incluant le carbone porteur des radicaux $R^1$ et $R^2$, allant de 3 à 8 ; $R^3$ représente un radical hydrocarboné, linéaire ou ramifié, saturé ou insaturé, pouvant comprendre au moins un cycle, ledit radical ayant un nombre d'atomes de carbone allant de 1 à 30 ; $R^4$ et $R^5$, identiques ou différents, représentent un radical alkyle, linéaire ou ramifié, ayant un nombre d'atomes de carbone allant de 1 à 20, un radical cycloalkyle, aryle, alkoxyle, aryloxyle, aralkyloxyle, perfluoroalkyle, aralkyle, dialkyl- ou diarylamino, alkylarylamino, thioalkyle, ou bien $R^4$ et $R^5$ sont reliés entre eux de façon à former un cycle incluant l'atome de phosphore, ledit hétérocycle ayant un nombre d'atomes de carbone allant de 2 à 4 et peut contenir en outre 1 ou plusieurs atomes d'oxygène, de soufre ou d'azote ;
ledit procédé consistant à oxyder un aminophoshonate de formule :

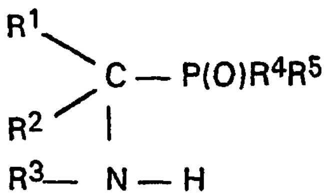

(II)

en milieu solvant au moyen d'un péracide organique non halogéné en milieu biphasique eau/solvant avec une phase aqueuse tamponnée à un pH allant de 5 à 12 ; ledit aminophosphonate étant obtenu par réaction d'un composé carbonylé $R^1R^2C(O)$, d'une amine primaire $R^3NH_2$ et d'un composé phosphoré $HP(O)R^4R^5$, $R^1$, $R^2$, $R^3$, $R^4$ et $R^5$ ayant les significations précédemment données en effectuant les étapes (successives) suivantes :

a) on fait réagir un composé carbonylé $R^1R^2C(O)$ avec une amine primaire $R^3NH_2$ selon un rapport molaire $R^1R^2C(O)$ / $R^3NH_2$ compris entre 0,8 et 1,5 et, de préférence, compris entre 0,9 et 1,1 à une température comprise entre 0°C et 120°C, à une pression allant de 1 à 10 bars ; puis on élimine l'eau formée du milieu réactionnel ; et

b) on fait réagir le composé obtenu en a) avec un composé phosphoré $HP(O)R^4R^5$ ;

ledit procédé étant **caractérisé en ce que** l'on effectue l'étape b) en présence d'un acide de Lewis, en utilisant un rapport molaire $HP(O)R^4R^5$ / composé obtenu dans l'étape a), sensiblement égal à 1 à une température au plus égale à 100°C et **en ce que** le milieu obtenu en b) est soumis directement et sans purification à une réaction d'oxydation réalisée selon les conditions mentionnées précédemment.

**2.** Procédé selon la revendication 1, **caractérisé en ce que** l'acide de Lewis est choisi parmi $BF_3$, ses complexes avec le diethyléther, le tétrahydrofuranne ; les triflates des lanthanides, $SnCl_4$, $SnCl_2$, $ZnCl_2$.

**3.** Procédé selon la revendication 2, **caractérisé en ce que** l'acide de Lewis est le diethyléthertrifluoroborane $(CH_3CH_2)_2O.BF_3$.

**4.** Procédé selon l'une des revendications 1 à 3, **caractérisé en ce que** l'acide de Lewis est utilisé en une quantité molaire au plus égale à 20 % par rapport à l'imine obtenue dans l'étape a).

**5.** Procédé selon la revendication 4, **caractérisé en ce que** l'acide de Lewis est utilisé en une quantité molaire comprise entre 5 % et 15 %.

**6.** Procédé selon la revendication 1, **caractérisé en ce que** l'amine $R^3NH_2$ est la tertiobutylamine, l'isopropylamine, la diphénylméthylamine, la 1-phényléthylamine ou la cyclohexylamine.

**7.** Procédé selon la revendication 6, **caractérisé en ce que** l'amine $R^3NH_2$ est la tertiobutylamine.

**8.** Procédé selon la revendication 1, **caractérisé en ce que** le dérivé phosphoré $HP(O)R^4R^5$ est le phosphite de diméthyle, le phosphite de diéthyle, le phosphite de n-propyle, le phosphite de diisopropyle ou le phosphite de dibenzyle.

**9.** Procédé selon la revendication 8, **caractérisé en ce que** le dérivé phosphoré $HP(O)R^4R^5$ est le phosphite de diéthyle.

**10.** Procédé selon la revendication 1, **caractérisé en ce que** le composé carbonylé $R^1R^2C(O)$ est le pivalaldéhyde, l'isobutyraldéhyde, le cyclohexanecarboxaldéhyde ou la cyclohexanone.

**11.** Procédé selon la revendication 10, **caractérisé en ce que** le composé carbonylé $R^1R^2C(O)$ est le pivalaldéhyde.

**12.** Procédé selon la revendication 1, **caractérisé en ce que** le peracide organique non halogéné est l'acide peracétique ou l'acide perpropionique.

## Claims

**1.** Process for the manufacture of compounds of general formula:

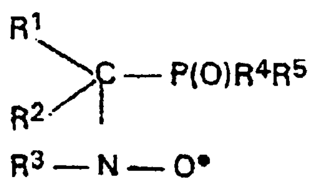

(I)

in which $R^1$ and $R^2$, which are identical or different, represent a hydrogen atom, a linear, branched or cyclic alkyl radical having a number of carbon atoms ranging from 1 to 10, an aryl radical, or an aralkyl radical having a number of carbon atoms ranging from 1 to 10, or else $R^1$ and $R^2$ are connected to one another so as to form a ring which includes the carbon atom carrying the said $R^1$ and $R^2$ radicals, the said ring having a number of carbon atoms, including the carbon carrying the $R^1$ and $R^2$ radicals, ranging from 3 to 8; $R^3$ represents a linear or branched and saturated or unsaturated hydrocarbonaceous radical which can comprise at least one ring, the said radical having

a number of carbon atoms ranging from 1 to 30; and $R^4$ and $R^5$, which are identical or different, represent a linear or branched alkyl radical having a number of carbon atoms ranging from 1 to 20 or a cycloalkyl, aryl, alkoxyl, aryloxyl, aralkyloxyl, perfluoroalkyl, aralkyl, dialkyl- or diarylamino, alkylarylamino or thioalkyl radical, or else $R^4$ and $R^5$ are connected to one another so as to form a ring which includes the phosphorus atom, the said heterocycle having a number of carbon atoms ranging from 2 to 4 and being able in addition to comprise one or more oxygen, sulphur or nitrogen atoms; the said process consisting in oxidizing an aminophosphonate of formula

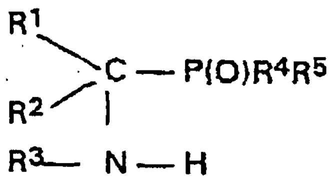

(II)

in a solvent medium using a nonhalogenated organic peracid in a water/solvent two-phase medium with an aqueous phase buffered at a pH ranging from 5 to 12; the said aminophosphonate being obtained by reaction of a carbonyl compound $R^1R^2C(O)$, of a primary amine $R^3NH_2$ and of a phosphorus compound $HP(O)R^4R^5$, $R^1$, $R^2$, $R^3$, $R^4$ and $R^5$ having the meanings given above, by carrying out the following (successive) stages:

a) a carbonyl compound $R^1R^2C(O)$ is reacted with a primary amine $R^3NH_2$ according to an $R^1R^2C(O)/R^3NH_2$ molar ratio of between 0.8 and 1.5 and preferably of between 0.9 and 1.1 at a temperature of between 0°C and 120°C and a pressure ranging from 1 to 10 bar; then the water formed is removed from the reaction medium; and
b) the compound obtained in a) is reacted with a phosphorus compound $HP(O)R^4R^5$;

the said process being **characterized in that** stage b) is carried out in the presence of a Lewis acid using an $HP(O)R^4R^5$/compound obtained in stage a) molar ratio substantially equal to 1 at a temperature at most equal to 100°C and **in that** the medium obtained in b) is subjected directly and without purification to an oxidation reaction carried out according to the conditions mentioned above.

**2.** Process according to Claim 1, **characterized in that** the Lewis acid is chosen from $BF_3$, its complexes with diethyl ether or tetrahydrofuran; lanthanide triflates, $SnCl_4$, $SnCl_2$ or $ZnCl_2$.

**3.** Process according to Claim 2, **characterized in that** the Lewis acid is boron trifluoride diethyl ether $(CH_3CH_2)_2O \cdot BF_3$.

**4.** Process according one of Claims 1 to 3, **characterized in that** the Lewis acid is used in a molar amount at most equal to 20% with respect to the imine obtained in stage a).

**5.** Process according to Claim 4, **characterized in that** the Lewis acid is used in a molar amount of between 5% and 15%.

**6.** Process according to Claim 1, **characterized in that** the amine $R^3NH_2$ is tert-butylamine, isopropylamine, diphenylmethylamine, 1-phenylethylamine or cyclohexylamine.

**7.** Process according to Claim 6, **characterized in that** the amine $R^3NH_2$ is tert-butylamine.

**8.** Process according to Claim 1, **characterized in that** the phosphorus derivative $HP(O)R^4$ $R^5$ is dimethyl phosphite, diethyl phosphite, di(n-propyl) phosphite, diisopropyl phosphite or dibenzyl phosphite.

**9.** Process according to Claim 8, **characterized in that** the phosphorus derivative $HP(O)R^4R^5$ is diethyl phosphite.

**10.** Process according to Claim 1, **characterized in that** the carbonyl compound $R^1R^2C(O)$ is pivalaldehyde, isobutyraldehyde, cyclohexanecarboxaldehyde or cyclohexanone.

**11.** Process according to Claim 10, **characterized in that** the carbonyl compound $R^1R^2C(O)$ is pivalaldehyde.

**12.** Process according to Claim 1, **characterized in that** the nonhalogenated organic peracid is peracetic acid or perpropionic acid.

**Patentansprüche**

**1.** Verfahren zur Herstellung von Verbindungen der allgemeinen Formel:

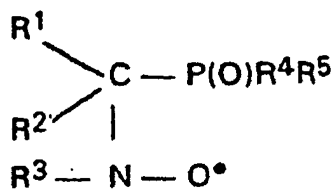

(I)

worin $R^1$ und $R^2$ gleich oder verschieden sind und für ein Wasserstoffatom, einen linearen, verzweigten oder cyclischen Alkylrest mit 1 bis 10 Kohlenstoffatomen, einen Arylrest oder einen Aralkylrest mit 1 bis 10 Kohlenstoffatomen stehen oder auch so miteinander verbunden sind, daß sie mit dem die Reste $R^1$ und $R^2$ tragenden Kohlenstoffatom einen Ring bilden, der einschließlich des die Reste $R^1$ und $R^2$ tragenden Kohlenstoffatoms 3 bis 8 Kohlenstoffatome aufweist; $R^3$ für einen linearen oder verzweigten, gesättigten oder ungesättigten, gegebenenfalls mindestens einen Ring enthaltenden Kohlenwasserstoffrest mit 1 bis 30 Kohlenstoffatomen steht; $R^4$ und $R^5$ gleich oder verschieden sind und für einen linearen oder verzweigten Alkylrest mit 1 bis 20 Kohlenstoffatomen, einen Cycloalkyl-, Aryl-, Alkoxy-, Aryloxy-, Aralkyloxy-, Perfluoralkyl-, Aralkyl-, Dialkyl- oder Diarylamino-, Alkylarylamino- oder Thioalkylrest stehen oder auch so miteinander verbunden sind, daß sie mit dem Phosphoratom einen Ring bilden, der 2 bis 4 Kohlenstoffatome aufweist und außerdem ein oder mehrere Sauerstoff-, Schwefel- oder Stickstoffatome enthalten kann;
bei dem man ein Aminophosphonat der Formel

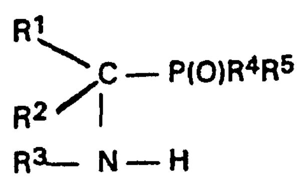

(II)

in einem Lösungsmittelmedium mit einer nichthalogenierten organischen Persäure in einem Wasser/Lösungsmittel-Zweiphasenmedium mit einer bei einem pH-Wert von 5 bis 12 gepufferten wäßrigen Phase oxidiert, wobei das Aminophosphonat durch Umsetzung einer Carbonylverbindung $R^1R^2C(O)$ mit einem primären Amin $R^3NH_2$ und einer Phosphorverbindung $HP(O)R^4R^5$ , worin $R^1$, $R^2$, $R^3$, $R^4$ und $R^5$ die oben angegebenen Bedeutungen haben, dadurch erhältlich ist, daß man die folgenden (aufeinanderfolgenden) Schritte durchführt:

a) Umsetzung einer Carbonylverbindung $R^1R^2C(O)$ mit einem primären Amin $R^3NH_2$ in einem Molverhältnis von $R^1R^2C(O)$ zu $R^3NH_2$ zwischen 0,8 und 1,5 und vorzugsweise zwischen 0,9 und 1,1 bei einer Temperatur zwischen 0°C und 120°C und einem Druck von 1 bis 10 bar und anschließende Entfernung des gebildeten Wassers aus dem Reaktionsmedium;

b) Umsetzung der in a) erhaltenen Verbindung mit einer Phosphorverbindung $HP(O)R^4R^5$;

**dadurch gekennzeichnet, daß** man Schritt b) in Gegenwart einer Lewis-Säure unter Verwendung eines Molverhältnisses von $HP(O)R^4R^5$ zu der in a) erhaltenen Verbindung von ungefähr 1 bei einer Temperatur von höchstens 100°C durchführt und das in b) erhaltene Medium direkt und ohne Reinigung einer unter den obigen Bedingungen durchgeführten Oxidationsreaktion unterwirft.

2. Verfahren nach Anspruch 1, **dadurch gekennzeichnet, daß** man die Lewis-Säure unter $BF_3$, dessen Komplexen mit Diethylether oder Tetrahydrofuran, Lanthanidtriflaten, $SnCl_4$, $SnCl_2$ oder $ZnCl_2$ auswählt.

3. Verfahren nach Anspruch 2, bei dem man als Lewis-Säure Bortrifluorid-Diethyletherat $(CH_3CH_2)_2O.BF_3$ verwendet.

4. Verfahren nach einem der Ansprüche 1 bis 3, **dadurch gekennzeichnet, daß** man die Lewis-Säure in einer molaren Menge von höchstens 20%, bezogen auf das in Schritt a) erhaltene Imin, verwendet.

5. Verfahren nach Anspruch 4, **dadurch gekennzeichnet, daß** man die Lewis-Säure in einer molaren Menge zwischen 5 und 15% verwendet.

6. Verfahren nach Anspruch 1, **dadurch gekennzeichnet, daß** man als Amin $R^3NH_2$ tert.-Butylamin, Isopropylamin, Diphenylmethylamin, 1-Phenylethylamin oder Cyclohexylamin verwendet.

7. Verfahren nach Anspruch 6, **dadurch gekennzeichnet, daß** man als Amin $R^3NH_2$ tert.-Butylamin verwendet.

8. Verfahren nach Anspruch 1, **dadurch gekennzeichnet, daß** man als Phosphorderivat $HP(O)R^4R^5$ Dimethylphosphit, Diethylphosphit, n-Propylphosphit, Diisopropylphosphit oder Dibenzylphosphit verwendet.

9. Verfahren nach Anspruch 8, **dadurch gekennzeichnet, daß** man als Phosphorderivat HP (O) $R^4R^5$ Diethylphosphit verwendet.

10. Verfahren nach Anspruch 1, **dadurch gekennzeichnet, daß** man als Carbonylverbindung $R^1R^2C(O)$ Pivalaldehyd, Isobutyraldehyd, Cyclohexancarboxaldehyd oder Cyclohexanon verwendet.

11. Verfahren nach Anspruch 10, **dadurch gekennzeichnet, daß** man als Carbonylverbindung $R^1R^2C(O)$ Pivalaldehyd verwendet.

12. Verfahren nach Anspruch 1, **dadurch gekennzeichnet, daß** man als nichthalogenierte organische Persäure Peressigsäure oder Perpropionsäure verwendet.